**Europäisches Patentamt**

**European Patent Office**

**Office européen des brevets**

(19)

(11) Veröffentlichungsnummer : **0 365 920 B1**

(12)     # EUROPÄISCHE PATENTSCHRIFT

(45) Veröffentlichungstag der Patentschrift :
**06.05.92 Patentblatt 92/19**

(51) Int. Cl.⁵ : **G01C 19/38**

(21) Anmeldenummer : **89118871.6**

(22) Anmeldetag : **11.10.89**

---

(54) **Filteranordnung zur Erzeugung eines Schätzwertes einer durch Störungen beeinflussten Messgrösse.**

---

(30) Priorität : **26.10.88 DE 3836417**

(43) Veröffentlichungstag der Anmeldung :
**02.05.90 Patentblatt 90/18**

(45) Bekanntmachung des Hinweises auf die
Patenterteilung :
**06.05.92 Patentblatt 92/19**

(84) Benannte Vertragsstaaten :
**BE CH DE FR GB LI NL SE**

(56) Entgegenhaltungen :
**DE-A- 3 146 374**
**DE-A- 3 240 804**
**DE-C- 3 131 110**
**DE-C- 3 131 111**

(73) Patentinhaber : **Bodenseewerk Gerätetechnik GmbH**
**Alte Nussdorfer Strasse 15 Postfach 1120**
**W-7770 Überlingen/Bodensee (DE)**

(72) Erfinder : **Wick, Jost, Dr.**
**Elbgaustrasse 178**
**W-2000 Hamburg 53 (DE)**
Erfinder : **Senn, Hans Jörg**
**Wallstrasse 3**
**W-7860 Schopfheim (DE)**

(74) Vertreter : **Weisse, Jürgen, Dipl.-Phys. et al**
**Patentanwälte Dipl.-Phys. Jürgen Weisse**
**Dipl.-Chem. Dr. Rudolf Wolgast Bökenbusch**
**41 Postfach 11 03 86**
**W-5620 Velbert 11 Langenberg (DE)**

## Beschreibung

Die Erfindung betrifft eine Meridiankreiselanordnung zur Bestimmung eines Kreiselrichtmomentes, das von Störungen beeinflußt ist, enthaltend

(a) einen pendelnd mit horizontaler Drallachse aufgehängten Kreisel,

(b) einen auf Auslenkung des Kreisels um eine vertikale Achse ansprechenden Abgriff,

(c) einen Drehmomenterzeuger, durch den auf den Kreisel ein dem Kreiselrichtmoment entgegenwirkendes Drehmoment erzeugbar ist,

(d) einen Fesselregler, der von dem Signal des Abgriffs beaufschlagt ist und einen Erregerstrom für den Drehmomenterzeuger zur Kompensation des Kreiselrichtmomentes liefert,

(e) Mittel zur Erzeugung von diesem Erregerstrom entsprechenden Ausgangssignalen,

(f) ein Filter, das eine Gewichtung der Ausgangssignale vornimmt zur Erzeugung eines Schätzwertes des Kreiselrichtmomentes,

(g) Mittel zur Gewinnung eines Maßes für die Störungen und

(h) Mittel zur Veränderung der Gewichtung der Ausgangssignale in Abhängigkeit von dem Maß der Störung.

## Zugrundeliegender Stand der Technik

Durch die DE-OS 1 941 808 und die DE-OS 1 941 809 ist,ein bandaufgehängter Meridiankreisel bekannt, bei welchem die Auslenkung des Kreisels aus einer Bandnullage durch einen Abgriff abgegriffen und in ein elektrisches Signal umgesetzt wird. Dieses Signal ist über einen Verstärker auf einen um die Bandachse wirksamen Drehmomenterzeuger geschaltet. Der Drehmomenterzeuger wirkt auf den Kreisel und kompensiert das um die Bandachse auf den Kreisel wirkende "Kreiselrichtmoment", das die Drallachse des Kreisels nach Nord auszurichten trachtet. Der Erregerstrom des Drehmomenterzeugers ist proportional dem Kreiselrichtmoment. Es ist eine von diesem Erregerstrom beaufschlagte Anzeigevorrichtung zur Anzeige der Nordrichtung vorgesehen. Bei den genannten Druckschriften besteht diese Anzeigevorrichtung in einem Stellmotor, durch welchen die Bandaufhängung solange verdreht wird, bis der Erregerstrom null wird. Dann liegt die Kreiseldrallachse in der Nordrichtung, so daß kein Kreiselrichtmoment mehr wirkt. Mit der Bandaufhängung ist ein Fernrohr verbunden, das dann nach Nord ausgerichtet ist.

Die DE-OS 2 229 431 zeigt einen bandaufgehängten Meridiankreisel bei welchem ebenfalls die Auslenkung des Kreisels aus einer Bandnulllage unter dem Einfluß des Kreiselrichtmomentes mittels eines Abgriffs erfaßt und in ein elektrisches Signal umgesetzt wird. Dieses Signal steuert über einen Verstärker einen Stellmotor, der ein Fernrohr verdreht. Mit dem Stellmotor ist ein Stellungsgeber verbunden. Das Signal des Stellungsgebers bestimmt über einen Verstärker den Erregerstrom eines auf den Kreisel um die Bandachse wirkenden Drehmomenterzeugers.

Schließlich zeigt die DE-AS 21 24 357 ein MeridianKreiselgerät mit einem in einem Zwischengehäuse an einem Band aufgehängten Kreisel. Ein Abgriff erzeugt ein Abgriffsignal nach Maßgabe der Auslenkung des Kreisels aus der Bandnullage. Ein Drehmomenterzeuger übt ein dem Kreiselrichtmoment entgegenwirkendes Gegenmoment auf den Kreisel aus, wobei das Abgriffsignal wieder mit hohem Verstärkungsgrad auf den Drehmomenterzeuger geschaltet ist. Das Zwischengehäuse ist durch einen Stellmotor verdrehbar. Das Abgriffsignal ist auf einen Speicher geschaltet. Durch eine Steuerschaltung ist das Abgriffsignal nach dem Einstellen des Kreisels über eine Umschaltvorrichtung von dem Abgriff ab- und auf den Stellmotor aufschaltbar. Ein Rückführkreis macht den Drehwinkel des Stellmotors proportional zu dem gespeicherten Abgriffsignal.

Die vorstehend erwähnten Meridiankreisel gestatten die relativ schnelle Bestimmung der Nordrichtung. Die Meridiankreisel sind dabei möglichst störungsfrei auf einem Stativ angeordnet, das seinerseits fest auf der Erde steht und vor Erschütterungen möglichst geschützt ist. Es ist nicht möglich, solche Meridiankreisel ohne besondere weitere Vorkehrungen in einer gestörten Umgebung, beispielsweise in einem Fahrzeug anzuordnen.

Es sind daher Filteranordnungen vorgesehen worden, durch welche eine Filterung des die "Nordabweichung" repräsentierenden Signals, nämlich des Erregerstromes des Drehmomenterzeugers, erfolgt.

Die DE-OS 25 45 026 zeigt einen bandaufgehängten Kreisel mit Abgriff und Drehmomenterzeuger, bei welchem ein dem Erregerstrom des Drehmomenterzeugers proportionales Signal durch einen Analog-Digital-Wandler digitalisiert wird. Das mit einem festen Takt erhaltene Digitalsignal wird einem Rechner zur rekursiven Mittelwertbildung zugeführt. Der jeweils zuletzt rekursiv erhaltene Mittelwert wird sofort ausgegeben. Durch die Mittelwertbildung erfolgt eine Filterung. Durch die rekursive Bildung dieses Mittelwertes wird erreicht, daß schon schnell ein, wenn auch u.U. noch ungenauer, Wert für die Nordabweichung zur Verfügung steht, der sich mit fortschreitender Zeit laufend verbessert, wobei aber die erforderliche Speicherkapazität sich in Grenzen hält.

Eine ähnliche Anordnung zeigt die DE-OS 26 18 868. Dort wird jeweils der Mittelwert aus einer festen Anzahl von Digitalsignalen, nämlich den letzten N Digitalsignalen gebildet, wobei N eine feste, ganze Zahl ist. Auch dieser Mittelwert wird rekursiv gebildet.

Die Mittelwertbildung gestattet es, weißes Rauschen herauszumitteln. Bei Meridiankreiseln der vorliegenden Art in gestörter Umgebung werden jedoch durch Beschleunigungen an der Bandaufhängung relativ langsam ansteigende und dann wieder abklingende Änderungen des Erregerstromes des Drehmomenterzeugers hervorgerufen, die sich durch Mittelwertbildung nicht eliminieren lassen. Vielmehr wird der Mittelwert durch solche Störungen verfälscht.

Durch die DE-PS 31 31 110 ist ein Kreiselgerät mit einem bandaufgehängten Meridiankreisel bekannt, bei welchem das Kreiselrichtmoment durch ein Gegenmoment kompensiert wird. Das Gegenmoment wird von einem um die Bandachse wirkenden Drehmomenterzeuger auf das bandaufgehängte Kreiselgehäuse ausgeübt. Der Drehmomenterzeuger wird über einen Verstärker von einem Abgriff gespeist, der auf Auslenkungen des Kreiselgehäuses gegenüber einer Gehäusereferenz anspricht. Zur Unterdrückung von Störungen, die durch einen "Gleichrichtereffekt" bei Schwingungen des Gerätegehäuses auftreten, sind an dem Gerätegehäuse zwei mit ihren Empfindlichkeitsachsen zueinander senkrechte Beschleunigungsmesser angebracht. Signalverarbeitungsmittel enthalten ein Modell für die Störmomentdynamik, nach welcher Beschleunigungen sich als Störmomente um die Hochachse auswirken. Auf dieses Modell sind die Signale der Beschleunigungsmesser aufgeschaltet. Das Modell liefert ein Störmomentsignal, mit welchem die Messung des Kreiselrichtmoments korrigiert wird.

Bei dem Meridiankreisel nach der DE-PS 31 31 110 wird die Beschleunigung an der Bandaufhängung gemessen. Das erfordert zusätzliche Beschleunigungsmesser. Der erhaltene Meßwert wird mit einer nur durch ein Modell erhaltenen Größe als dem Einfluß der Störung korrigiert.

Durch die DE-PS 31 31 111 ist ein Kreiselgerät zur Bestimmung der Nordrichtung bekannt, das ebenfalls einen bandaufgehängten Meridiankreisel, einen Abgriff und einen Drehmomenterzeuger nach Art der vorstehend erwähnten Kreiselgeräte enthält. Zur Unterdrückung von Störungen ist ein Kalman - Filter vorgesehen, welches das System des gefesselten Meridiankreisels nachbildet und als erstes Filtereingangssignal die Differenz aus dem auf den Drehmomenterzeuger aufgeschalteten Signal (Erregerstrom) und eines vom Kalman - Filter gelieferten Schätzwertes dieses Signals erhält. Auf das Kalman - Filter ist zusätzlich als zweites Filtereingangssignal die Differenz eines die Abweichung des Meridiankreisels von der Gehäusereferenz darstellenden Signals und eines von dem Kalman - Filter gelieferten Schätzwertes dieses Signals aufgeschaltet. Der Schätzwert des Erregerstromes wird dann als Maß für die Abweichung einer Gerätereferenz von Nord ausgegeben. Dadurch soll erreicht werden. daß der Schätzwert schnell in einen "wahren" Wert einläuft und Störungen unterdrückt werden.

Das bei der DE-PS 31 31 111 vorgesehene Kalman - Filter unterdrückt jedoch nur stochastische Störungen, nicht jedoch Störungen der oben erwähnten Art, die relativ langsam ansteigen und dann entsprechend langsam wieder abklingen.

Durch die DE-A-32 40 804 ist eine Meridiankreiselanordnung mit einem pendelnd mit horizontaler Drallachse aufgehängtem Kreisel bekannt. Der Kreisel sitzt in einem Pendelkörper, der kardanisch in einem Gehäuse aufgehängt ist. Der Pendelkörper ist im Gehäuse arretiert, kann sich aber schrittweise in die vertikale Stellung mit horizontaler Drallachse des Kreisels einstellen. Das Kreiselrichtmoment, welches die Drallachse des Kreisels nach Nord auszurichten trachtet, wird durch ein Gegenmoment kompensiert, das von einem Drehmomenterzeuger auf den Kreisel ausgeübt wird. Der Drehmomenterzeuger wird von einem Abgriff, der auf Auslenkungen des Kreisels um die vertikale Achse anspricht, über einen Fesselkreis gesteuert. Der Erregerstrom des Drehmomenterzeugers liefert ein Maß für das Kreiselrichtmoment und damit für den Winkel zwischen der an die Referenzrichtung gefesselten Drallachse des Kreisels und der Nordrichtung.

Bei der DE-A-32 40 804 sind Mittel vorgesehen, durch welche der Einfluß von Störungen auf die Messung reduziert werden kann. Zu diesem Zweck sind Mittel zur Erzeugung von dem Erregerstrom entsprechenden Ausgangssignalen, ein Filter, das eine Gewichtung der Ausgangssignale vornimmt zur Erzeugung eines Schätzwertes des Kreiselrichtmomentes, Mittel zur Gewinnung eines Maßes für die Störungen und Mittel zur Veränderung der Gewichtung der Ausgangssignale in Abhängigkeit von dem Maß der Störung vorgesehen. Als Maß für die Störung werden bei der DE-A-32 40 804 die Ableitung der Ausgangssignale und der Absolutbetrag dieser Ableitung gebildet. Diese Absolutbeträge bewirken über einen Tiefpaß die Löschung von Ausgangssignalen, wenn das Ausgangssignal des Tiefpasses einen bestimmten Schwellwert überschreitet und damit eine Unruhe des Meßwertes signalisiert. Die Ausgangssignale werden dabei durch ein Schieberegister verzögert, bevor sie auf eine Auswerterschaltung aufgeschaltet werden. Die Auswerterschaltung gewichtet die Ausgangssignale. Die Gewichte werden wiederum von der Ableitung des fließenden Mittelwertes der ankommenden Ausgangssignale bestimmt, so daß konstante Meßwerte gegenüber ansteigenden oder abfallenden Meßwerten bevorzugt werden.

Der Grundgedanke ist dabei folgender: Die Meßgröße sollte konstant sein. Solange die Meßgröße im wesentlichen konstant bleibt, nur überlagert von Rauschen, wird die Meßgröße bei der Filterung stark gewichtet. Durch die Filterung wird der Schätzwert der Meßgröße mit der Zeit zunehmend verbessert. Wenn aber eine Störung der erwähnten Art auftritt, dann wird die Meßgröße während des Auftretens der Störung mit einem geringeren Gewicht berücksichtigt. Praktisch wird das Filter während des Auftretens der Störung abgeschaltet und der zuletzt gewonnene Schätzwert gespeichert, bis die Störung wieder abgeklungen ist.

## Offenbarung der Erfindung

Der Erfindung liegt die Aufgabe zugrunde, bei einer Meridiankreiselanordnung der eingangs genannten Art eine Verfälschung des ausgegebenen Schätzwertes durch langsam auf- und abklingende Störungen zu vermeiden.

Erfindungsgemäß wird diese Aufgabe dadurch gelöst, daß

(i) der Meridiankreisel bandaufgehängt ist und

(j) Mittel vorgesehen sind zur Bestimmung einer Eigenschwingung des Kreisels um eine zur Bandachse und zur Drallachse senkrechte Querachse als Maß für die Störung.

Es hat sich gezeigt, daß bei relativ langsam auf- und abklingenden Störungen der geschilderten Art, bestimmte Eigenschwingungen des Systems angeregt werden, nämlich insbesondere eine Schwingung um eine zur Bandachse und zur Drallachse senkrechte Achse. Diese Eigenschwingung, die z.B. bei einem bestimmten Meridiankreisel bei 2 Hertz liegt, kann somit als Indikator für das Auftreten von Störungen dienen.

Es können Mittel zur Bildung der Varianz der besagten Eigenschwingung vorgesehen sein. Die Varianz der Eigenschwingung kann verzögert auf Mittel zur adaptiven Erzeugung einer Gewichtsgröße für das Filter aufgeschaltet sein. Die Gewichtsgröße kann nach einer für das betreffende System empirisch ermittelten Funktion von der verzögerten Varianz der Eigenschwingung abhängen.

Das Filter kann ein Kalman - Filter mit einem Zustandsschätzer und Mitteln zur Darstellung einer Kovarianzgleichung sein, wobei die Mittel zur Darstellung der Kovarianzgleichung von der Gewichtsgröße gesteuert sind.

Dem Kalman - Filter kann ein Vorfilter vorgeschaltet sein, das ein Mittelwertfilter und eine Integrationsstufe enthält.

Die Kovarianzen von den Mitteln zur Darstellung der Kovarianzgleichung und die Gewichtsgröße können Mitteln zur Bewertung der Filtergüte zugeführt werden, welche bei Erreichen einer vorgegebenen Filtergüte einen Abbruch der Filterung und Ausgabe eines Schätzwertes des Erregerstromes des Drehmomenterzeugers bewirken.

Ausführungsbeispiele der Erfindung sind nachstehend unter Bezugnahme auf die zugehörigen Zeichnungen näher erläutert.

## Kurze Beschreibung der Zeichnungen

Fig.1 ist eine schematisch - perspektivische Darstellung eines bandaufgehängten Meridiankreisels.

Fig.2 zeigt als Blockdiagramm die Modellstruktur des bandaufgehängten Meridiankreisels.

Fig.3 zeigt als Blockdiagramm die Struktur eines adaptiven Filters zur Unterdrückung von Störungen.

Fig.4 zeigt die Grundform einer rechenzeitsparenden Realisierung des Filters.

Fig.5 zeigt eine Abwandlung des Filters von Fig.4.

Fig.6 ist eine weitere Ausgestaltung des Filters von Fig.4 oder 5.

## Bevorzugte Ausführung der Erfindung

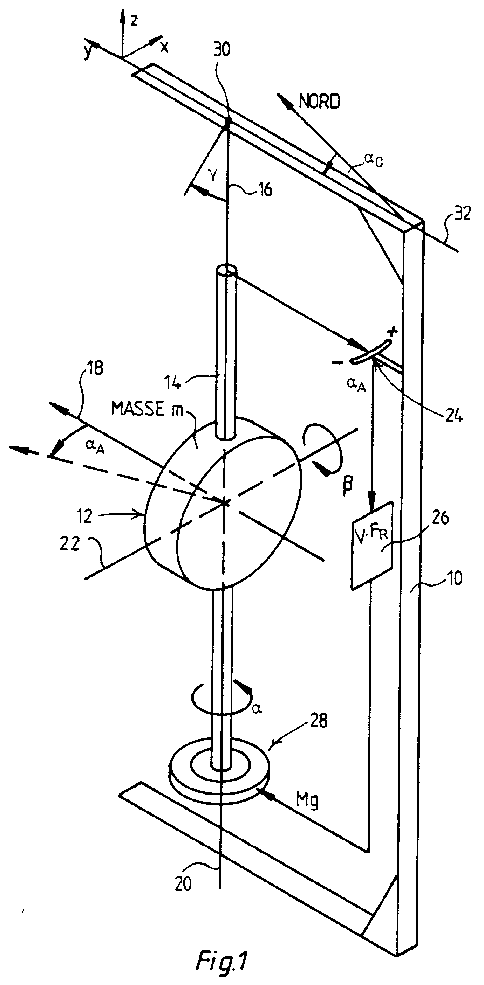

In Fig.1 ist ein Gehäuse 10 schematisch angedeutet. In dem Gehäuse 10 ist ein Kreisel 12 mit einem Mast 14 an einem Band 16 aufgehängt. Mit 18 ist die Drallachse des Kreisels 12 bezeichnet. Die Drallachse 18 verläuft im Ruhezustand horizontal und senkrecht zu der vertikalen Bandachse 20. Senkrecht zu der Drallachse 18 und der Bandachse 20 verläuft eine Querachse 22. In Fig.1 ist die Drallachse 18 in der Bandnullage dargestellt, also in einer Lage, in welcher das Band 16 nicht tordiert ist. Eine Auslenkung des Kreisels 12 um die Bandachse 20 aus dieser Bandnullage, wie sie in Fig.1 gestrichelt angedeutet ist, wird durch einen Abgriff 24 abgegriffen. Der Winkel der Auslenkung ist mit $\alpha_A$ bezeichnet. Der Abgriff 24 erzeugt ein elektrisches Abgriffsignal. Dieses Abgriffsignal wird durch einen Verstärker 26 verstärkt und erzeugt einen Erregerstrom, der auf einen Drehmomenterzeuger 28 gegeben wird. Der Anker des Drehmomenterzeugers 28 ist mit dem Kreisel 12 verbunden.

Auf den Kreisel 12 wirkt infolge der Erddrehung ein Kreiselrichtmoment, welches die Drallachse des Kreisels 12 nach Nord auszurichten trachtet. Diesem Kreiselrichtmoment wirkt das Moment des Drehmomenterzeugers 28 entgegen. Wenn der Kreisel 12 unter dem Einfluß des Kreiselrichtmomentes aus der Bandnullage herausbewegt wird, entsteht an dem Abgriff 24 ein Signal, das über den Drehmomenterzeuger 28 dieser Auslenkung entgegenwirkt. Der Kreisel 12 wird also elektrisch an die Bandnullage (oder allgemeiner: an eine gehäusefeste Referenzlage) gefesselt.

Außer der Bewegung um die Bandachse 20 kann der Kreisel auch eine Bewegung um die Querachse 22 ausführen. Der Drehwinkel um die Querachse 22 ist mit $\beta$ bezeichnet. Schließlich ist, wie in Fig.1 angedeutet, auch eine Bewegung um eine zur Drallachse parallele, durch den Aufhängepunkt 30 des Bandes 16 gehende Achse 32 möglich. Der Drehwinkel um diese Achse 32 ist mit $\gamma$ bezeichnet.

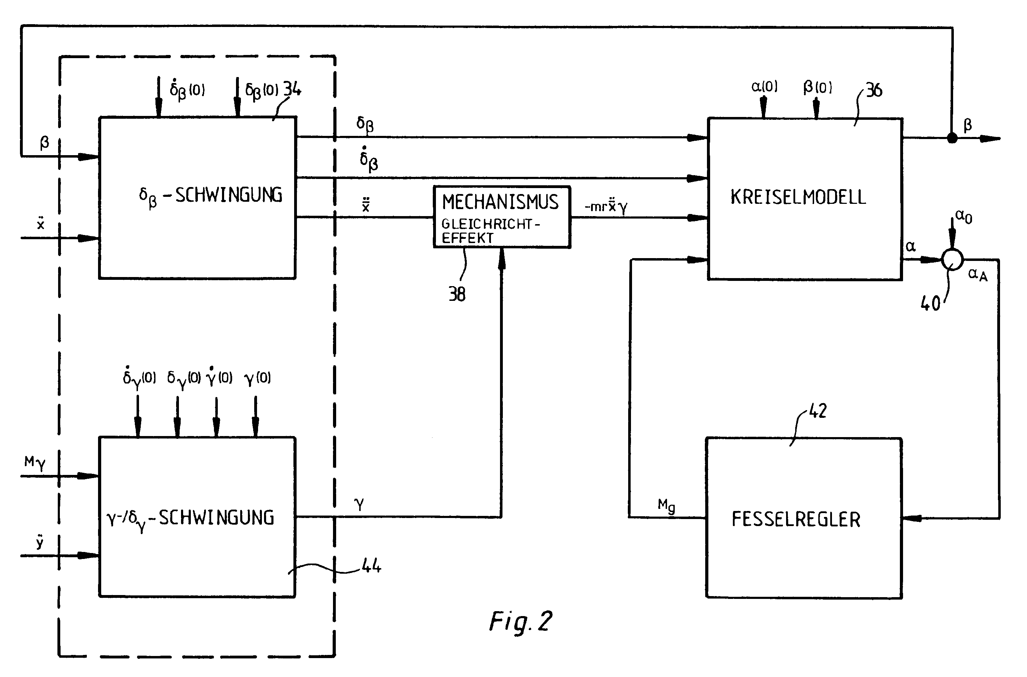

Dieser bandaufgehängte, gefesselte Kreisel ist ein schwingungsfähiges System mit bestimmten Eigenschwingungen. In Fig.2 ist als Blockdiagramm ein Modell dieses Systems dargestellt.

Der bandaufgehängte Kreisel erfährt Störungen in Form von Beschleunigungen $\ddot{x}$ und $\ddot{y}$ am Aufhängepunkt 30 (Fig. 1). Weiterhin können Momente $M\gamma$ um die Achse 32 auf den Kreisel 12 wirken. Beschleunigungen in der x-Richtung regen eine Eigenschwingung um die Querachse 22 an, die mit $\delta_\beta$ bezeichnet ist. Diese Schwingung ist durch Block 34 dargestellt. $\delta_\beta(0)$ und $\dot{\delta}_\beta(0)$ sind die Anfangszustände dieser Eigenschwingung. Es ergeben sich daraus die Schwingungszustände $\delta_\beta$ und $\dot{\delta}_\beta$, die an dem Kreisel 12 wirksam werden, welcher in dem Modell als Block 36 dargestellt ist. Außerdem ergibt sich eine durch die Schwingung modifizierte

Beschleunigung $\ddot{x}$. Diese liefert zusammen mit dem Winkel $\gamma$ einen "Gleichrichtereffekt", der durch Block 38 dargestellt ist. Auf den Kreisel 12 (Block 36) wirkt dadurch ein Moment - $mr\ddot{x}\gamma$.

Der Kreisel 36 führt eine Bewegung $\alpha$ um die Bandachse 20 und eine Bewegung $\beta$ um die Querachse 22 aus. Der Winkel zwischen der Gehäusereferenz und der Nord ist $\alpha_0$. Die Differenz des Winkels $\alpha$ und des Winkels $\alpha_0$, die in dem Modell in dem Summierpunkt 40 gebildet wird, liefert den Winkel $\alpha_A$, also die Auslenkung gegenüber der Gehäusereferenz. Das ist der Winkel, der von dem Abgriff 24 abgegriffen wird und als Signal auf den Verstärker 26 und Drehmomenterzeuger 28 gegeben wird, die in Fig.2 durch einen Block 42 als "Fesselregler" dargestellt sind. Der Fesselregler 42 liefert ein Moment $M_g$, das an dem Kreisel 12 wirksam wird und in Fig.2 auf den Block 36 gegeben wird. Der Block 36 erhält weiterhin die Anfangswerte der beiden Winkel $\alpha(0)$ und $\beta(0)$.

In Fig.2 symbolisiert ein Block 44 die Schwingung um die Achse 32, und insbesondere die um diese Achse 32 auftretende Eigenschwingung, die mit $\delta_\gamma$ bezeichnet ist. Auf den Block 44 wirken die Störungen $M_\gamma$ und $\ddot{y}$, die Anfangswerte der Schwingungen werden beschrieben durch $\delta_\gamma(0)$, $\dot{\delta}_\gamma(0)$, $\gamma(0)$ und $\dot{\gamma}(0)$.

Das beschriebene System hat, wie gesagt, Eigenschwingungen um die Querachse 22 und um die Achse 32. Diese Eigenschwingungen werden durch Störungen in Form von translatorischen Beschleunigungen im Aufhängepunkt 30 angeregt. Es hat sich gezeigt, daß bei Auftreten von Störungen, die zu einer relativ langsamen auf- und abklingenden Abweichung des Erregerstromes des Drehmomenterzeugers 28 von dem konstanten Wert führt, diese Eigenschwingungen angeregt werden. Das gilt insbesondere für die $\delta_\beta$-Schwingung um die Querachse 22. Die Amplitude dieser Eigenschwingung ist daher ein gutes Mass für die Stördynamik.

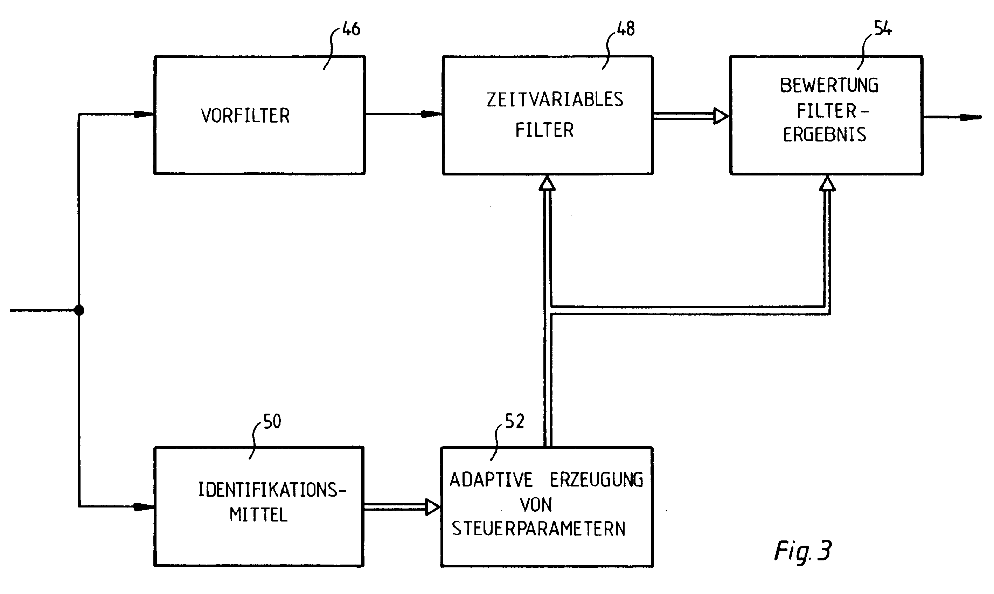

Fig.3 ist ein Blockdiagramm und zeigt die Struktur einer Filteranordnung, die Störungen identifizieren und unterdrücken kann.

Eine Meßgröße, hier der Erregerstrom des Drehmomenterzeugers 28, wird abgetastet und digitalisiert und als Eingangsgröße $M_g(k)$ der Filteranordnung zugeführt, wobei k eine laufende ganze Zahl ist und den Takt bezeichnet. Diese Eingangsgröße wird einmal über ein Vorfilter 46 auf ein zeitvariables Filter 48 gegeben und zum anderen auf Identifizierungsmittel 50 zur Identifizierung einer Störung. Die Identifizierungsmittel 50 beeinflussen Parametermittel 52, welche adaptiv Steuerparameter für das zeitvariable Filter erzeugen. Das zeitvariable Filter 48 und die Parametermittel 52 sind so ausgelegt, daß bei Identifizierung einer Störung durch die Identifizierungsmittel 50 die dann erscheinenden, durch das Vorfilter gefilterten Eingangswerte in dem Filter 48 nicht oder mit vermindertem Gewicht berücksichtigt werden. Wenn also eine Störung auftritt, die ein bestimmtes Maß überschreitet und daher zu einer Verschlechterung des bisher erhaltenen Schätzwertes führen würde, dann werden die während des Auftretens der Störung erscheinenden Eingangswerte nicht berücksichtigt. Der bisher erhaltene Schätzwert wird festgehalten. Nach dem Abklingen der Störung erfolgt ausgehend von diesem festgehaltenen Schätzwert eine weitere Filterung zur weiteren Verbesserung des Schätzwertes.

Die Steuerparameter der Parametermittel 52 werden gleichzeitig für die Bestimmung der Güte des Filterergebnisses verwendet. Die Steuerparameter werden daher auf Bewertungsmittel 54 gegeben, durch welche eine Bewertung der Güte des Filterergebnisses erfolgt. Durch die Bewertungsmittel wird die Filterung abgebrochen und der Schätzwert $M_g$ ausgegeben, wenn eine vorgeschriebene Güte des Filterergebnisses erreicht ist.

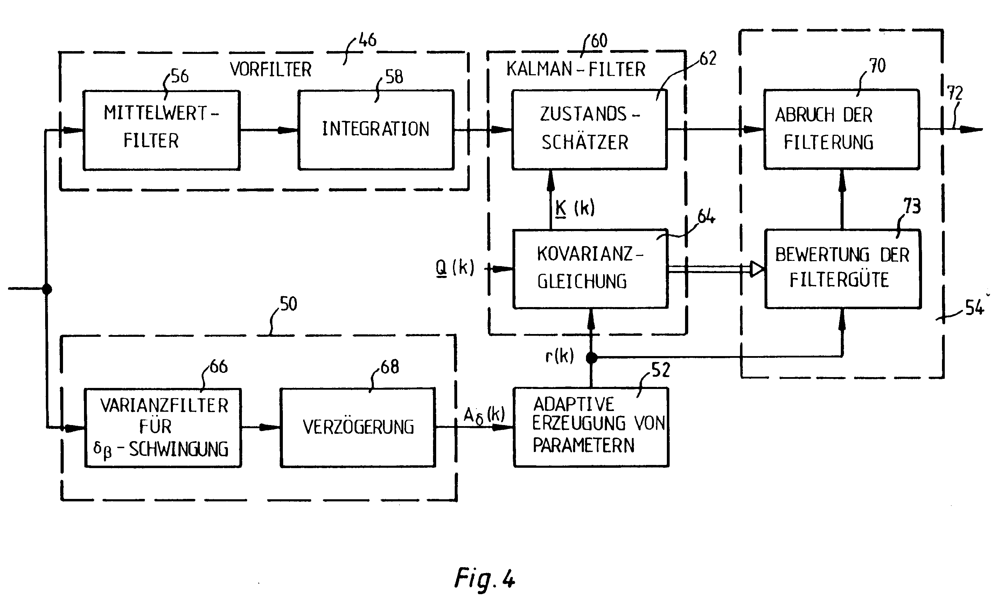

Fig.4 zeigt die Anwendung dieses Prinzips auf die Filterung des Ausgangssignals, nämlich des Erregerstromes des Drehmomenterzeugers 28, bei einem bandaufgehängten Meridiankreisel nach Fig.1. Die nachfolgend beschriebene rechenzeitsparende Realisierungsform basiert auf einem Kalman-Filter möglichst niedriger Ordnung.

Das Vorfilter 46 enthält ein auf die dominanten Eigenfrequenzen des Meridiankreisels abgestimmtes Mittelwertfilter 56 und eine diesem nachgeschaltete Integrationsstufe 58. Der Ausgang der Integrationsstufe 58 ist auf ein Kalman - Filter 60 gegeben. Das Kalman - Filter 60 enthält einen Zustandsschätzer 62 zweiter Ordnung und Kovarianzmittel 64 zur Darstellung der Kovarianzgleichung dritter Ordnung. Die Kovarianzmittel 64 liefern die zeitvariable Koeffizienten $K_1(k)$ und $K_2(k)$ für den Zustandsschätzer. Der Zustandsschätzer 62 liefert einen Schätzwert $\hat{M}_g(k)$ für den Erregerstrom des Drehmomenterzeugers 28.

Das Kalman - Filter ist von der Art, wie es in der gleichzeitig eingereichten Patentanmeldung "Filter zur Gewinnung eines zeitinvarianten Nutzsignals aus verrauschten Messungen" der gleichen Anmelderin beschrieben ist.

Der Eingangswert wird weiterhin auf die Identifikationsmittel 50 gegeben. Bei der bevorzugten Ausführung nach Fig.4 enthalten die Identifikationsmittel 50 ein Varianzfilter 66 für die " $\delta_\beta$ - Schwingung", also die Eigenschwingung des Systems um die Querachse 22. Das Varianzfilter 66 bildet die Varianz dieser Schwingung des Meßsignals, also die Summe der quadrierten Abweichung vom Mittelwert. Die Filterlänge ist so abgestimmt, dass die Varianz ein Mass für das Amplitudenquadrat der - Schwingung ist. Das Varianzfilter liefert somit einen Wert, der ein Maß für die $\delta_\beta$ - Schwingung darstellt. Modellgemäss ist diese Schwingung wiederum ein Maß für auftretende Störungen. Das Ausgangssignal des Varianzfilters $A_\delta(k)$ wird mit einer Verzögerung, wie durch Block 68 dargestellt ist, auf die Parametermittel gegeben.

Die Parametermittel 52 liefern eine Gewichtswert $r(k)$ nach einer empirisch für einen bestimmten Meridiankreisel ermittelten Funktion der verzögerten Varianz $A_\delta(k)$. Der Gewichtswert $r(k)$ ist umso kleiner, je größer die Varianz ist.

Der Gewichtswert $r(k)$ beaufschlagt die Kovarianzmittel 64 und bestimmt die zeitvarianten Filterparameter der Matrix $\underline{P}(k)$. Die Filterparameter $\underline{P}(k)$ bestimmen wiederum die Koeffizienten $K_1(k)$ und $K_2(k)$ des Zustandsschätzers 62.

Der Zustandsschätzer 62 liefert einen Schätzwert $\hat{M}_g(k)$ für die Meßgröße, hier den Erregerstrom des Drehmoment erzeugers 28. Dieser Schätzwert für die konstante Meßgröße wird, solange keine Störungen auftreten, mit zunehmender Meßzeit zunehmend besser. Die Gewichtung über den Gewichtswert $r(k)$ bewirkt, daß Eingangswerte, die während einer solchen Störung auftreten, bei der Schätzung im Kalman - Filter 60 nicht oder nur mit einem verminderten Gewicht berücksichtigt werden.

Der Gewichtswert $r(k)$ und die Filterparameter $\underline{P}(k)$ liefern ein Maß für die Güte der Schätzung. Diese Werte werden daher auf die Bewertungsmittel 73 gegeben. Diese Bewertungsmittel 73 entscheiden, ob die geforderte Güte der Filterung erreicht ist, und bewirken über Abbruchmittel 70 den Abbruch der Filterung und die Ausgabe des Schätzwertes $\hat{M}_g$ an einem Ausgang 72

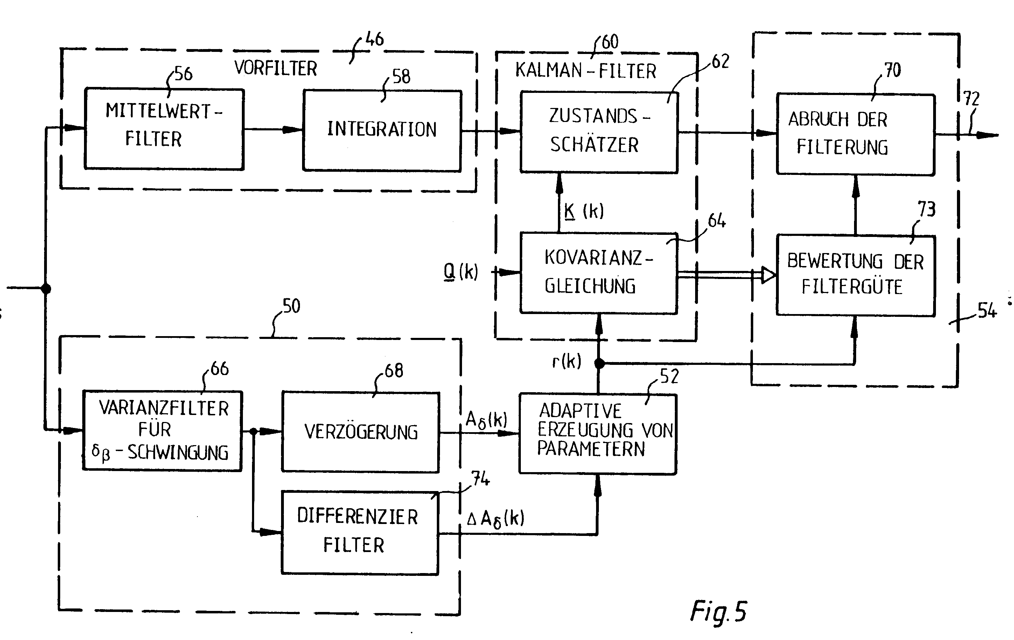

Bei der Abwandlung gemäß Fig.5 ist die Grundstruktur der Filteranordnung die gleiche wie bei Fig.4. Entsprechende Teile sind mit den gleichen Bezugszeichen versehen wie dort. Bei der Filteranordnung von Fig.5 wird die Varianz der $\delta_\beta$ - Schwingung von dem Varianzfilter 66 nicht nur direkt mit der Verzögerung gemäß Block 68 auf die Parametermittel 52 gegeben sondern außerdem über ein Differenzierfilter 74 als $\Delta A_\delta(k)$. Damit wird nicht nur die Amplitude der $\delta_\beta$-Schwingung berücksichtigt sondern auch die Änderung dieser Amplitude.

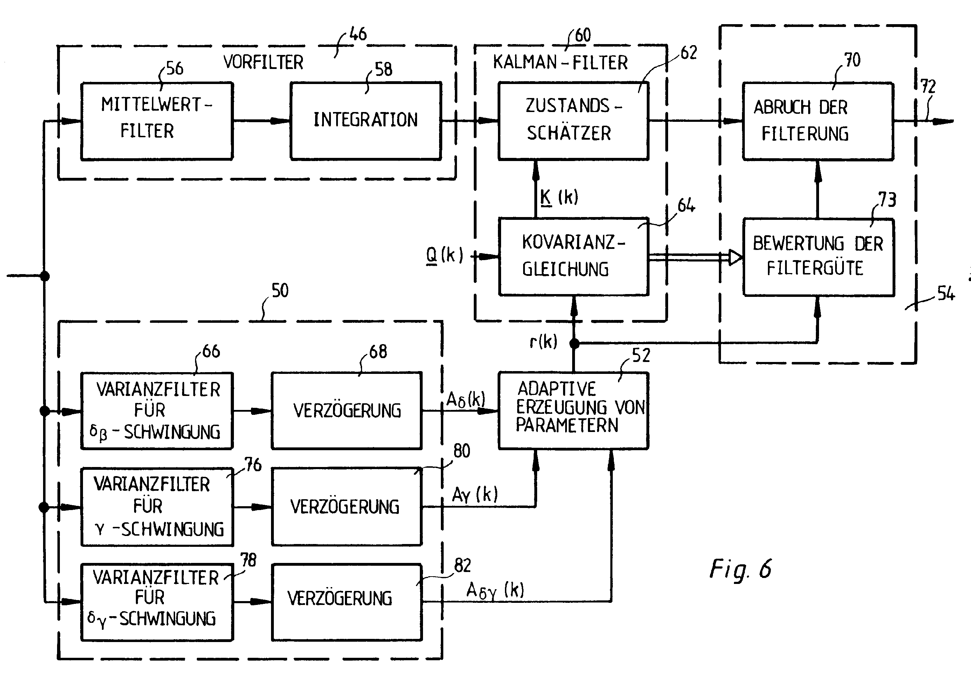

Auch bei der Abwandlung gemäß Fig.6 ist die Grundstruktur der Filteranordnung die gleiche wie bei Fig.4. Entsprechende Teile sind in Fig.6 mit den gleichen Bezugszeichen versehen wie in Fig.4.

Bei der Filteranordnung nach Fig.6 werden als Indikatoren für das Auftreten einer Störung nicht nur die $\delta_\beta$ - Schwingung benutzt sondern auch die anderen Eigen schwingungen des Systems und deren Oberwellen. Dementsprechend sind zusätzlich zu dem Varianzfilter 66 für die $\delta_\beta$ - Schwingung ein Varianzfilter 76 für die $\gamma$ -Schwingung und ein Varianzfilter 78 für die $\delta_\gamma$ - Schwingung vorgesehen. Die Varianzen $A_\gamma(k)$ bzw. $A\delta_\gamma(k)$ werden mit Verzögerung, dargestellt durch Blöcke 80 bzw. 82 auf die Parametermittel 52 gegeben.

## Patentansprüche

1. Meridiankreiselanordnung zur Bestimmung eines Kreiselrichtmomentes, das von Störungen beeinflußt ist, enthaltend

(a) einen pendelnd mit horizontaler Drallachse aufgehängten Kreisel (12),

(b) einen auf Auslenkung des Kreisels um eine vertikale Achse ansprechenden Abgriff (24),

(c) einen Drehmomenterzeuger (28), durch den auf den Kreisel ein dem Kreiselrichtmoment entgegenwirkendes Drehmoment erzeugbar ist,

(d) einen Fesselregler (42), der von dem Signal des Abgriffs beaufschlagt ist und einen Erregerstrom für den Drehmomenterzeuger zur Kompensation des Kreiselrichtmomentes liefert,

(e) Mittel zur Erzeugung von diesem Erregerstrom entsprechenden Ausgangssignalen,

(f) ein Filter (46, 48), das eine Gewichtung der Ausgangssignale vornimmt zur Erzeugung eines Schätzwertes des Kreiselrichtmomentes,

(g) Mittel (50) zur Gewinnung eines Maßes für die Störungen und

(h) Mittel (52) zur Veränderung der Gewichtung der Ausgangssignale in Abhängigkeit von dem Maß der Störung, **dadurch gekennzeichnet, daß**

(i) der Meridiankreisel bandaufgehängt ist und

(j) Mittel (66,68,76,78) vorgesehen sind zur Bestimmung einer Eigenschwingung des Kreisels um eine zur Bandachse und zur Drallachse senkrechte Querachse als Maß für die Störung.

2. Meridiankreiselanordnung nach Anspruch 1, **dadurch gekennzeichnet, daß** das Filter ein Kalman - Filter (60) ist.

3. Meridiankreiselanordnung nach Anspruch 1 oder 2, **gekennzeichnet durch** Mittel (66) zur Bildung der Varianz der besagten Eigenschwingung.

4. Meridiankreiselanordnung nach Anspruch 3, **dadurch gekennzeichnet,** daß die Varianz der Eigenschwingung verzögert auf Mittel (52) zur adaptiven Erzeugung einer Gewichtsgröße (r(k)) für das Filter (60) aufgeschaltet ist.

5. Meridiankreiselanordnung nach Anspruch 4, **dadurch gekennzeichnet,** daß die Gewichtsgröße (r(k)) nach einer für das betreffende System empirisch ermittelten Funktion von der verzögerten Varianz (A $\delta$ (k)) der Eigenschwingung abhängt.

6. Meridiankreiselanordnung nach Anspruch 5, **dadurch gekennzeichnet, daß**

(a) das Filter ein Kalman - Filter (60) mit einem Zustandsschätzer (62) und Mitteln (64) zur Darstellung einer Kovarianzgleichung ist, und

(b) die Mittel (64) zur Darstellung der Kovarianzgleichung von der Gewichtsgröße (r(k)) gesteuert sind.

7. Meridiankreiselanordnung nach Anspruch 6, **dadurch gekennzeichnet, daß** dem Kalman - Filter (60) ein Vorfilter vorgeschaltet ist, das ein Mittelwertfilter (56) und eine Integrationsstufe (58) enthält.

8. Meridiankreiselanordnung nach Anspruch 6 oder 7, **dadurch gekennzeichnet, daß** die Kovarianzen von den Mitteln (64) zur Darstellung der Kovarianzgleichung und die Gewichtsgröße (r(k)) Mitteln (73) zur Bewertung der Filtergüte zugeführt werden, welche bei Erreichen einer vorgegebenen Filtergüte einen Abbruch der Filterung (7o) und Ausgabe eines Schätzwertes (72) des Erregerstromes des Drehmomenterzeugers (28) bewirken.

## Claims

1. Meridian gyro arrangement for determining a gyro directional torque which is influenced by disturbances, comprising

(a) a gyro (12) pendulously suspended with horizontal spin axis,

(b) a pick-off (24) responding to excursion of the gyro about a vertical axis,

(c) a torquer (28) which is adapted to generate a torque on the gyro, which torque counteracts the gyro directional torque,

(d) a caging control (42) to which the signal from the pick-off is applied and which provides an energizing current for the torquer for compensation for the gyro directional torque,

(e) means for generating output signals indicative of this energizing current,

(f) a filter (46, 48) which weights the output signals to generate an estimate of the gyro directional torque,

(g) means (50) for providing a measure of the disturbances, and

(h) means (52) for changing the weights of the output signals in dependence on the measure of the disturbance, **characterized in that**

(i) the meridian gyro is tape-suspended and

(j) means (66, 68, 76, 78) are provided for determination of a characteristic oscillation of the gyro about a transverse axis orthogonal to the tape axis and to the spin axis as measure of the disturbance.

2. Meridian gyro arrangement as set forth in claim 1, **characterized in that** the filter is a Kalman filter (60).

3. Meridian gyro arrangement as set forth in claims 1 or 2, **characterized by** means (66) for forming the variance of said characteristic oscillations.

4. Meridian gyro arrangement as set forth in claim 3, **characterized in that** the variance of the characteristic oscillation is applied with delay to means (52) for adaptive generation of a weight quantity (r(k)) for the filter (60).

7

5. Meridian gyro arrangement as set forth in claim 4, **characterized in that** the weight quantity (r(k)) depends on the delayed variance ($A_\delta$(k)) of the characteristic oscillation according to a function empirically determined for the system in question.

6. Meridian gyro arrangement as set forth in claim 5, **characterized in that**

(a) the filter is a Kalman filter (60) with a state estimator (62) and means (64) for representing a co-variance equation, and

(b) the means (64) for representing the co-variance equation is controlled by the weight quatity (r(k)).

7. Meridian gyro arrangement as set forth in claim 6, **characterized in that** a pre-filter which comprises a mean value filter (56) and an integrating stage (58) is provided on the input side of the Kalman filter (60).

8. Meridian gyro arrangement as set forth in claims 6 or 7, **characterized in that** the co-variances from the means (64) for representing the co-variance equation and the weight quantity (r(k)) are supplied to means (73) for evaluating the filter quality, which terminate the filtering (70) and cause the output of an estimate (72) of the energizing current of the torquer (28), when a predetermined filter quality is achieved.

## Revendications

1. Disposition de gyroscope méridien destinée à la détermination d'un moment directeur de gyroscope influencé par des perturbations, comprenant

(a) un gyroscope (12) suspendu à pendule à axe de spin horizontal,

(b) un capteur (24) répondant à la déviation du gyroscope autour d'un axe vertical,

(c) un générateur de couple (28) qui peut engendrer un couple au gyroscope, qui réagit au moment directeur de gyroscope,

(d) un régulateur captif (42) auquel est appliqué le signal du capteur et qui fournit un courant d'excitation pour le générateur de couple afin de compenser le moment directeur de gyroscope,

(e) des moyens destinés à engendrer des signaux correspondant à ce courant d'excitation,

(f) un filtre (46, 48) effectuant une pondération des signaux de sortie afin d'engendrer une valeur estimative du moment directeur de gyroscope,

(g) des moyens (50) destinés à obtenir une mesure pour les perturbations, et

(h) des moyens (52) destinés à modifier la pondération des signaux de sortie en fonction de la mesure de la perturbation,

**caractérisée par le fait que**

(i) le gyroscope méridien est suspendu à bandes, et

(j) des moyens (66, 68, 76, 78) sont prévus, qui sont destinés à déterminer une vibration propre du gyroscope autour d'un axe transversal perpendiculaire à l'axe de spin et à l'axe de bande comme mesure pour la perturbation.

2. Disposition de gyroscope méridien selon la revendication 1, **caractérisée par le fait que** le filtre est un filtre Kalman (60).

3. Disposition de gyroscope méridien selon la revendication 1 ou 2, **caractérisée par** des moyens (66) destinés à former la variance de ladite vibration propre.

4. Disposition de gyroscope méridien selon la revendication 3, **caractérisée par le fait que** la variance de la vibration porpre est appliquée avec retard à des moyens (52) destinés à la génération adaptive d'une grandeur de poids (r(k)) pour le filtre (60).

5. Disposition de gyroscope méridien selon la revendication 4, **caractérisée par le fait que** la grandeur de poids (r(k)) dépend de la variance retardée (A (k)) de la vibration propre selon une fonction empiriquement déterminée pour le système respectif.

6. Disposition de gyroscope méridien selon la revendication 5, **caractérisée par le fait que**

(a) le filtre et un filtre Kalman (60) avec un estimateur d'état (62) et des moyens (64) destinés à représenter une équation de covariance, et

(b) les moyens (64) destinés à représenter l'équation de covariance sont commandés par la grandeur de poids (r(k)).

7. Disposition de gyroscope méridien selon la revendication 6, **caractérisée par le fait qu'**un préfiltre est intercalé en avant du filtre Kalman (60) et comprend un filtre de moyenne (56) et une étape d'intégration (58).

8. Disposition de gyroscope méridien selon la revendication 6 ou 7, **caractérisée par le fait que** les covariances des moyens (64) destinés à représenter l'équation de covariance, et la grandeur de poids (r(k)) sont conduites à des moyens (73) destinés à évaluer la qualité de filtre et provoquant une interruption du filtrage (70) lorsqu'une qualité de filtre prédéterminée est obtenue, et l'émission d'une valeur estimative (72) du courant d'excitation du générateur de couple (28).

*Fig.1*

9

$\dot{\delta}_\beta(0)$  $\delta_\beta(0)$ 34

$\beta$

$\ddot{x}$

$\delta_\beta$ – SCHWINGUNG

$\delta_\beta$

$\dot{\delta}_\beta$

$\ddot{x}$

MECHANISMUS
GLEICHRICHT-
EFFEKT

38

$-mr\ddot{x}\gamma$

$\alpha(0)$  $\beta(0)$ 36

KREISELMODELL

$\beta$

$\alpha_0$

$\alpha$

40

$\alpha_A$

$\dot{\delta}_\gamma(0)$  $\delta_\gamma(0)$  $\dot{\gamma}(0)$  $\gamma(0)$

$M_\gamma$

$\ddot{y}$

$\gamma$-/$\delta_\gamma$ – SCHWINGUNG

$\gamma$

44

$M_g$

42

FESSELREGLER

EP 0 365 920 B1

Fig. 2

```
                    ┌──────────────┐         ┌──────────────┐         ┌──────────────┐
                    │   VORFILTER  │ ──────▶ │ ZEITVARIABLES│ ═════▶  │  BEWERTUNG   │ ──▶
                    │      46      │         │   FILTER  48 │         │   FILTER-    │
                    └──────────────┘         └──────────────┘         │ ERGEBNIS  54 │
                                                                      └──────────────┘
```

VORFILTER  46

ZEITVARIABLES FILTER  48

BEWERTUNG FILTER-ERGEBNIS  54

IDENTIFIKATIONS-MITTEL  50

ADAPTIVE ERZEUGUNG VON STEUERPARAMETERN  52

11

EP 0 365 920 B1

*Fig. 3*

*Fig. 4*

EP 0 365 920 B1

Fig.5

EP 0 365 920 B1

VORFILTER ⌐46

┌─────────────────┐        ┌─────────────────┐
│  MITTELWERT-    │   58   │                 │
│  FILTER    ⌐56  │───────▶│  INTEGRATION    │
└─────────────────┘        └─────────────────┘

KALMAN-FILTER ⌐60

┌─────────────────┐        ┌─────────────────┐   72
│  ZUSTANDS-  ⌐62 │        │  ABRUCH DER ⌐70 │──────▶
│  SCHÄTZER       │───────▶│  FILTERUNG      │
└─────────────────┘        └─────────────────┘

$\underline{K}$ (k)

┌─────────────────┐        ┌─────────────────┐
│  KOVARIANZ- ⌐64 │        │  BEWERTUNG DER  │
$\underline{Q}$(k) ──▶│  GLEICHUNG      │═════▶│  FILTERGÜTE ⌐73 │
└─────────────────┘        └─────────────────┘
                                              ⌐54

r(k)

⌐50

┌─────────────────┐        ┌─────────────────┐
│  VARIANZFILTER  │   68   │                 │  $A_\delta(k)$
│  FÜR       ⌐66  │───────▶│  VERZÖGERUNG    │───────▶
│  $\delta_\beta$ - SCHWINGUNG │        └─────────────────┘
└─────────────────┘

┌─────────────────┐        ┌─────────────────┐
│  VARIANZFILTER  │   80   │                 │  $A_\gamma$ (k)
│  FÜR       ⌐76  │───────▶│  VERZÖGERUNG    │───────▶
│  $\gamma$ -SCHWINGUNG │        └─────────────────┘
└─────────────────┘

┌─────────────────┐        ┌─────────────────┐
│  VARIANZFILTER  │   82   │                 │  $A_{\delta\gamma}$ (k)
│  FÜR       ⌐78  │───────▶│  VERZÖGERUNG    │───────▶
│  $\delta_\gamma$-SCHWINGUNG │        └─────────────────┘
└─────────────────┘

┌─────────────────┐
│  ADAPTIVE   ⌐52 │
│  ERZEUGUNG VON  │
│  PARAMETERN     │
└─────────────────┘

*Fig. 6*